# EUROPÄISCHE PATENTANMELDUNG

(11) **EP 4 145 088 A1**
(43) Veröffentlichungstag der Anmeldung: **08.03.2023**
(21) Anmeldenummer: 22181323.1
(22) Anmeldetag: 27.06.2022
(51) Int. Cl.: G01B 21/20, G05B 19/404, B23Q 17/00

(54) **VERFAHREN ZUR ERMITTLUNG EINES RUNDLAUF- UND/ODER RUNDHEITSFEHLERS BEI EINEM SPANNMITTEL UND VORRICHTUNG ZUR ERMITTLUNG EINES RUNDLAUF- UND/ODER RUNDHEITSFEHLERS BEI EINEM SPANNMITTEL SOWIE VERFAHREN ZUR ERMITTLUNG EINES RUNDLAUF- UND/ODER RUNDHEITSFEHLERS BEI EINEM WERKSTÜCK UND VORRICHTUNG ZUR ERMITTLUNG EINES RUNDLAUF- UND/ODER RUNDHEITSFEHLERS BEI EINEM WERKSTÜCK**

(30) Priorität: 07.09.2021 DE 102021123080
(71) Anmelder: Haimer GmbH, 86568 Hollenbach-Igenhausen (DE)
(72) Erfinder: KÜGLE, Wolfgang, 86551 Aichach-Griesbeckerzell (DE); HAIMER, Franz-Josef, 86568 Hollenbach-Igenhausen (DE)

(57) **Zusammenfassung**

Die Erfindung betrifft ein Verfahren 100 zur Ermittlung eines Rundlauf- und/oder Rundheitsfehlers bei einem Spannmittel 4 sowie eine diesbezügliche Vorrichtung 2. Die Erfindung betrifft Entsprechendes auch für ein Werkstück (4').

Zur Ermittlung des Rundlauf- und/oder Rundheitsfehlers bei einem Spannmittel 4 bzw. einem Werkstück (4') ist vorgesehen, dass bei einem in einer ersten Messposition gehaltenen Spannmittel 4 bzw. einem Werkstück (4') eine erste Rundlauf- und/oder Rundheitsmessung durchgeführt wird,
das Spannmittel 4 bzw. das Werkstück (4') von der ersten Messposition in eine zweite Messposition umgesetzt wird, bei dem in die zweite Messposition umgesetzten Spannmittel 4 bzw. Werkstück (4') eine zweite Rundlauf- und/oder Rundheitsmessung durchgeführt wird und aus der ersten und der zweiten Rundlauf- und/oder Rundheitsmessung ein Rundlauf- und/oder Rundheitsfehler bei dem Spannmittel 4 bzw. dem Werkstück (4') ermittelt wird.

## Beschreibung

Die Erfindung betrifft ein Verfahren zur Ermittlung eines Rundlauf- und/oder Rundheitsfehlers bei einem Spannmittel, insbesondere einer Werkzeug- oder Werkstückaufnahme, sowie eine Vorrichtung zur Ermittlung eines Rundlauf- und/oder Rundheitsfehlers bei einem Spannmittel, insbesondere einer Werkzeug- oder Werkstückaufnahme. Die Erfindung betrifft auch ein Verfahren zur Ermittlung eines Rundlauf- und/oder Rundheitsfehlers bei einem Werkstück sowie eine Vorrichtung zur Ermittlung eines Rundlauf- und/oder Rundheitsfehlers bei einem Werkstück.

Aus der DE 20 2005 015 488 U1 ist ein Mess- und Einstellgerät zum Vermessen charakteristischer Größen eines in einer Werkzeugaufnahme (bzw. hier als Werkzeugfutter bezeichnet) eingespannten Werkzeugs, beispielsweise einer Lage und Anordnung von einer Schneide des Werkzeugs, bekannt.

Bei diesem Mess- und Einstellgerät ist es auch möglich einen Rundlauf- und/oder Taumelfehler einer das Werkzeug - über ein Adapterelement und das Werkzeugfutter - aufnehmenden Werkzeugaufnahmespindel sowie auch einen Rundlauf- und/oder Taumelfehler des Adapterelements wie auch einen Gesamt-Rundlauf- und/oder Taumelfehler von Werkzeugaufnahmespindel und Adapterelement zu ermitteln.

Dazu wird an einem in die Werkzeugaufnahmespindel eingespannten Kalibrierungskörper, nämlich einem Kalibrierungsdorn, eine Rundlauf- und/oder Taumelfehlermessung durchgeführt -, indem eine (360°-)Kontur des eingespannten Kalibrierungsdorn (in 1° Inkrementen) vermessen und daraus der Rundlauf- und/oder Taumelfehler ermittelt wird. Dieser an dem Kalibrierungsdorn gemessene Rundlauf- und/oder Taumelfehler, welcher im Exakten einen Rundlauf- und/oder Taumelfehler des Kalibrierungsdorns zusammen mit dem der Werkzeugaufnahmespindel beinhaltet, wird als Rundlauf- und/oder Taumelfehler der Werkzeugaufnahmespindel angenommen. Dies gilt aber nur unter der Voraussetzung, dass der Rundlauf- und/oder Taumelfehler des Kalibrierungsdornes vernachlässigbar gering ist.

Eine weitere entsprechende Kalibrierungs-Rundlauf- und/oder Taumelfehlermessung wird dann an einem bzw. dem Adapterelement durchgeführt, wobei auch hier - im Exakten - der an dem Adapterelement gemessene Rundlauf- und/oder Taumelfehler denjenigen der Werkzeugaufnahmespindel zusammen mit dem des Adapterelements beinhaltet, aber auch hier wieder als Rundlauf- und/oder Taumelfehlers des Adapterelements angenommen wird.

Der so bei der DE 20 2005 015 488 U1 ermittelte Rundlauf- und/oder Taumelfehler der Werkzeugaufnahmespindel und des Adapterelements können zu einem Rundlauf- und/oder Taumelfehler des Gesamtsystems (aus Werkzeugaufnahmespindel und Adapterelements) addiert werden.

Bei der Vermessung eines Werkzeugs kann dann dieser Rundlauf- und/oder Taumelfehler des Gesamtsystems dort miteinberechnet bzw. dieser dadurch kompensiert werden - und so eine Präzision im Ergebnis der Vermessung verbessert werden.

Nachteilig erweist sich bei dem Mess- und Einstellgerät aus der DE 20 2005 015 488 U1 bzw. bei dortiger Rundlauf- und/oder Taumelfehlerermittlung, dass ein Rundlauf- und/oder Taumelfehler des das Werkzeug aufnehmende Werkzeugfutters bzw. der Werkzeugaufnahme unberücksichtigt bzw. unbekannt bleibt sowie aufwändige Kalibrierungsmessungen und Kalibrierungskörper für die Ermittlung des Rundlauf- und/oder Taumelfehlers der Werkzeugaufnahmespindel, des Adapterelements bzw. des Gesamtsystems aus Werkzeugaufnahmespindel und Adapterelement notwendig sind.

Es ist Aufgabe der Erfindung, die im Stand der Technik bekannte Ermittlung von Rundlauf- und/oder Taumelfehlern bei Werkzeugmaschinen bzw. dortiger Mess- und Einstellgeräten zu verbessern sowie auch eine einfache und doch genaue Ermittlung des Rundlauf- und/oder Taumelfehlers auch einer Werkzeugaufnahme zu ermöglichen.

Diese Aufgabe wird gelöst durch ein Verfahren zur Ermittlung eines Rundlauf- und/oder Rundheitsfehlers bei einem Spannmittel sowie eine Vorrichtung zur Ermittlung eines Rundlauf- und/oder Rundheitsfehlers bei einem Spannmittel mit den Merkmalen des jeweiligen unabhängigen Anspruchs.

Als Spannmittel können sowohl Werkzeugaufnahmen, als auch Werkstückaufnahmen gemeint sein.

Vorteilhafte Weiterbildungen der Erfindung sind Gegenstand abhängiger Ansprüche sowie der nachfolgenden Beschreibung - und beziehen sich sowohl auf das Verfahren wie auch auf die Vorrichtung.

Gegebenenfalls verwendete Begriffe, wie oben, unten, vorne, hinten, links oder rechts sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrieachsen hier beschriebener Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Rundlauffehler und Rundheitsfehler sind nach üblichem fachmännischen Verständnis zu verstehen, wobei der Rundlauffehler auch einen Taumelfehler mit meint. Auch sind Rundlaufmessungen und/oder Rundheitsmessungen fachbekannte Operationen (in der Regel für/an rotationssymmetrischen und/oder zu rotierenden Bauteilen(, deren 360°-(Außen-)Kontur bei einer solchen Messung meist in einer zu ihrer Symmetrie-/Rotationsachse orthogonalen Messebene "rundherum" abgetastet wird)), welche Rundlaufmessungen und/oder Rundheitsmessungen den Rundlauf bzw. den Rundlauffehler und/oder die Rundheit bzw. den Rundheitsfehler beschreibende Ergebnisse/Parameterwerte, wie beispielsweise Betrag, Richtung, Phase des Rundlauffehlers/Rundheitsfehlers, liefern.

Bei dem Verfahren zur Ermittlung eines Rundlauf- und/oder Rundheitsfehlers bei einem Spannmittel ist vorgesehen, dass bei einem in einer ersten Messposition gehaltenen Spannmittel eine erste Rundlauf- und/oder Rundheitsmessung durchgeführt wird.

So kann beispielsweise - bei bzw. für die erste Rundlauf- und/oder Rundheitsmessung - das Spannmittel, beispielsweise eine Werkzeug-/Werkstückaufnahme, in einem Haltemittel, wie in einer Aufnahmespindel einer Rundlaufmessvorrichtung, oder - im Allgemeinen - in einer Aufnahmespindel, wie einer Werkzeugaufnahmespindel, - in der ersten Messposition gehalten, beispielsweise gespannt gehalten, werden.

Dann wird das Spannmittel von der ersten Messposition in eine zweite Messposition umgesetzt.

Umgesetzt kann dabei meinen, dass das Spannmittel - relativ zu ihrem Haltemittel, wie beispielsweise die Aufnahmespindel, - um ihre Symmetrieachse gedreht wird - und so gedreht in dem Haltemittel eingesetzt bzw. (wieder dort) gehalten wird. Vereinfacht bzw. anschaulich ausgedrückt, das vermessene bzw. zu vermessene Spannmittel wird von seiner ersten Messposition in seine zweite Messposition - relativ zu dem Haltemittel um einen vorgebbaren (Umsetz-)Winkel - um ihre Symmetrieachse verdreht - und so "umgesetzt" in seinem Haltemittel (in seiner zweiten Messposition) dort gehalten.

Weiter ist dann vorgesehen, dass bei dem in die zweite Messposition umgesetzten Spannmittel eine zweite Rundlauf- und/oder Rundheitsmessung durchgeführt wird.

Aus der ersten und der zweiten Rundlauf- und/oder Rundheitsmessung - vereinfacht und anschaulich auch als Umsetzmessungen bezeichnet - wird dann ein Rundlauf- und/oder Rundheitsfehler bei dem bzw. für das Spannmittel ermittelt.

D.h., Ergebnisse aus der ersten und der zweiten Rundlauf- und/oder Rundheitsmessung, wie beispielsweise Kontur- und/oder Mittelpunkte des Spannmittels, werden zusammen verwendet, um daraus - beispielsweise nach vorgebbaren mathematischen Vorschriften bzw. Algorithmen, welche insbesondere geometrische bzw. trigonometrische Beziehungen berücksichtigen, den Rundlauf- und/oder Rundheitsfehler bei dem bzw. des Spannmittels (alleine, d.h. nur des Spannmittels)) zu ermitteln.

Gegebenenfalls können auch mehr als zwei Rundlauf- und/oder Rundheitsmessungen bzw. Umsetzmessungen durchgeführt werden, beispielsweise drei, vier, fünf oder auch viele, aus welchen allen dann bzw. unter Verwendung deren aller Ergebnisse dann der Rundlauf- und/oder Rundheitsfehler bei dem Spannmittel ermittelt wird.

Das Umsetzen zwischen der ersten und der zweiten Messung bzw. - im Falle mehrerer Messungen - zwischen jeweils einer/der vorangehenden und einer/der nachfolgenden Messung kann nach einem vorgebbaren Winkel (Umsetzwinkel) erfolgen. Dieser Umsetzwinkel kann - im Falle mehrerer Messungen - jeweils immer gleich sein - oder eben auch unterschiedlich sein.

Diesbezüglich kann es - im Falle mehrerer Messungen - auch zweckmäßig sein, zwei beliebige Messungen zu einem "Messpaket"/"-durchlauf" zu "bündeln" (, wie Falle von nur einer ersten und zweiten Messung) und für jedes dieser "Bündel" aus zwei Messungenbzw. erster und zweiter Messung erfindungsgemäß den - für dieses "Bündel" sich ergebenden - Rundlauf- und/oder Rundheitsfehler zu ermitteln.

Insbesondere zweckmäßig bei solchen Bündeln erscheint es, wenn die Umsetzung innerhalb der Bündel um den jeweils gleichen Winkel erfolgt - und zwischen den Bündeln um jeweils einen davon unterschiedlichen Umsetzwinkel. Vereinfacht und anschaulich ausgedrückt, erhält man so mehrere erfindungsgemäße Rundlauf- und/oder Rundheitsfehler bzw. Rundlauf- und/oder Rundheitsfehlermessungen bei unterschiedlichen Startwerten/- konfigurationen bzw. Anfangskonfigurationen.

Über einen Vergleich so erhaltender Rundlauf- und/oder Rundheitsfehler der jeweiligen "Bündel", kann sich so auch Gütemaß bzw. ein Maß für die Messgenauigkeit ergeben.

Die Vorrichtung zur Ermittlung eines Rundlauf- und/oder Rundheitsfehlers bei einem Spannmittel, insbesondere einer Werkzeugaufnahme oder einer Werkstückaufnahme, insbesondere nach dem vorbeschriebenen Verfahren, sieht eine Haltevorrichtung zum Halten eines Spannmittels in Messpositionen zur Durchführung einer Rundlauf- und/oder Rundheitsmessung, insbesondere der Umsetzmessungen, an dem Spannmittel vor.

Beispielsweise kann eine solche Haltevorrichtung (Haltemittel - s. oben) eine Aufnahmespindel einer Rundlaufmessvorrichtung, oder - im Allgemeinen - eine Aufnahmespindel, wie eine Werkzeugaufnahmespindel, sein.

Weiter vorgesehen bei der Vorrichtung ist eine Messvorrichtung zur Durchführung einer Rundlauf- und/oder Rundheitsmessung bei einem in der Haltevorrichtung in einer Messposition gehaltenen Spannmittel.

Soweit eine solche Messvorrichtung zur Durchführung einer Rundlauf- und/oder Rundheitsmessung bekannt ist, vermisst diese üblicherweise Punkte - meist in einer Ebene - einer Körperkontur (des zu vermessenden Körpers). Üblicherweise wird dabei der zu vermessende Körper relativ gegenüber einem (Mess-)Sensor um eine/seine Längs- bzw. Symmetrieachse (des zu vermessenden Körpers) gedreht, um so Mess- /Körperkonturpunkte in einer zu der Längs- bzw. Symmetrieachse orthogonalen (Radial-)Ebene zu erhalten.

Dabei können "berührende" Tastmessgeräte, wie Messuhren, Fühlhebelmessgeräte, (3D-)Taster, 2D/3D - Koordinatenmessgeräte oder Formtester, oder auch "berührungslose" Messgeräte, die beispielsweise auf optischer, induktiver oder kapazitiver Basis arbeiten, für die Rundlauf- und/oder Rundheitsmessung(- en) eingesetzt werden.

Unmittelbare Ergebnisse einer solchen Rundlauf- und/oder Rundheitsmessung können so (dreidimensionale/in einem vorgebbaren Koordinatensystem (z.B. durch kartesische Koordinaten/Polarkoordinaten) angebbare) Konturpunkte sein.

Als mittelbare Ergebnisse lassen sich daraus beispielsweise Mittelpunkte und/oder Winkel, Schnitte u.Ä. - sowie dann auch Parameterwerte des Rundlauf- und/oder Rundheitsfehlers, wie Betrag und/oder Phase des Rundlauf- und/oder Rundheitsfehlers, ermitteln. Dabei können auch statistische Verfahren, Glättungen, Transformationen und/oder Filter angewandt werden.

Ferner auch weist die Vorrichtung eine Auswerteeinrichtung zur Auswertung von von der Messvorrichtung durchgeführten Rundlauf- und/oder Rundheitsmessungen bzw. deren Messergebnissen auf.

Die Auswerteeinheit, beispielsweise eine programmierbare bzw. programmierte Recheneinheit, ist dabei derart eingerichtet, dass aus einer bzw. der ersten und einer bzw. der zweiten Rundlauf- und/oder Rundheitsmessung bei einem in der Haltevorrichtung gehaltenen Spannmittel ein bzw. der Rundlauf- und/oder Rundheitsfehler bei dem Spannmittel ermittelbar ist.

Unmittelbare und mittelbare Ergebnisse einer Rundlauf- und/oder Rundheitsmessung, welche durch die Auswerteeinheit erlangbar sind, sind im vorherigen erwähnt (vgl. (dreidimensionale/in einem vorgebbaren Koordinatensystem (kartesische Koordinaten/Polarkoordinaten) angebbare) Konturpunkte, Winkel, Schnitte, Parameterwerte des Rundlauf- und/oder Rundheitsfehlers, wie Betrag und/oder Phase des Rundlauf- und/oder Rundheitsfehlers).

Insbesondere kann die Auswerteeinheit bzw. das dortige programmierte Programm statistische Verfahren, Glättungen, Transformationen und/oder Filter anwenden.

Die erste Rundlauf- und/oder Rundheitsmessung bei dem Spannmittel ist dabei in einer ersten Messposition in der Haltevorrichtung durchgeführt worden; die zweite Rundlauf- und/oder Rundheitsmessung bei dem Spannmittel ist in einer zweiten Messposition in der Haltevorrichtung durchgeführt worden. Das Spannmittel ist dabei in der Haltevorrichtung von der ersten Messposition in die zweite Messposition umgesetzt worden (vgl. zum Umsetzen oben beim Verfahren).

Der Erfindung liegt die Überlegung zugrunde, dass an Objekten, wie die erwähnten Werkzeuge, Werkzeug- /Werkstückaufnahmen oder Adaptern, gemessene Rundlauf- und/oder Rundheitsfehler immer Gesamtfehler des gesamten Systems bzw. des gesamten "Strangs", angefangen bei der Aufnahmespindel bis zum zu vermessenen Objekt, d.h. angefangen bei der Aufnahmespindel weiter über ggfl. den Adapter, die Werkzeug-/Werkstückaufnahme und ggfl. das Werkstück/Werkzeug, sind.

Die Erfindung kommt zur Erkenntnis, welche sie erfindungsgemäß umsetzt, dass durch mehrere Rundlauf- und/oder Rundheitsmessungen an - wie hier vorgesehen - einem (in einem Haltemittel eingesetzten und dort vermessenen) Spannmittel in mehreren unterschiedlichen Umsetzpositionen, dann der - bei jeder Messung gemessene - Gesamtfehler des Systems (aus Haltemittel und Spannmittel) durch Verrechnung der Einzelmessungen auf Fehler der Einzelsystemkomponenten, wie hier vorgesehen des Spannmittels (und auch des Haltemittels), "herunterrechenbar ist".

Anders bzw. vereinfacht ausgedrückt, durch - mindestens einer ersten und einer zweiten Rundlauf- und/oder Rundheitsmessung an - wie hier vorgesehen - einem Spannmittel in mehreren unterschiedlichen Umsetzpositionen in einem Haltemittel, lassen sich durch Rechnung Rundlauf- und/oder Rundheitsfehler von anderen Systemkomponenten, wie beispielsweise des Haltemittels (beispielsweise einer Aufnahmespindel), herausrechnen bzw. eliminieren - und es verbleibt der Rundlauf- und/oder Rundheitsfehler der gewünschten Einzelkomponente, d.h. des Spannmittels (alleine).

Vereinfacht ausgedrückt, die Erfindung realisiert Umsetz-Rundlauf- und/oder Rundheitsmessungen an einem Spannmittel, um so aus diesen den Rundheits- und/oder Rundlauffehler des Spannmittels alleine/selbst bzw. nur des Spannmittels selbst zu bekommen.

Dabei erweist sich bei der Erfindung insbesondere von Vorteil, dass bei Einspannung des Spannmittels - in der ersten und zweiten Messposition bzw. in den gegebenenfalls mehreren Messpositionen an seinem Bezug bzw. Bezügen alle Formfehler an dem Bezug bzw. Bezügen mitberücksichtigt werden/sind - und so herausgerechnet werden bzw. werden können.

Die Erfindung kann dabei nicht nur den Rundlauf- und/oder Rundheitsfehler des Spannmittels selbst erhalten, sondern auch den Rundlauf- und/oder Rundheitsfehler des Haltemittels bzw. ggfl. aller sonstigen Systemkomponenten jeweils alleine, wie beispielsweise auch einer Aufnahmespindel und/oder Adapter.

Damit gelingt es der Erfindung auf einfache und wenig aufwändige Art und Weise wichtige, insbesondere für die Präzision und Qualität bei der Werkstückbearbeitung wichtige, Parameter zu ermitteln, welche helfen, die Qualität von bei der Werkstückbearbeitung eingesetzten Komponenten, wie die Spannmittel, zu beurteilen und die Qualität von herzustellenden Werkstücken zu verbessern.

Auch Verschleiß und Lebensdauer von Werkzeugen und/oder Austauschzyklen von diesen lassen sich dadurch reduzieren bzw. verlängern. Kosten insgesamt können so durch die Erfindung minimiert und die Sicherheit maximiert werden.

Überraschend war auch die Erkenntnis, dass die Erfindung bei/für Spannmittel auch bei bzw. für Werkstücke - zur Ermittlung dortiger Rundlauf- und/oder Rundheitsfehler - eingesetzt werden kann. Alle so im Zusammenhang mit Spannmittel beschrieben/genannte Aspekte und/oder - verfahrensseitige, wie vorrichtungsseitige - Ausführungen sind so auch auf Werkzeuge bzw. dortiger erfindungsgemäßer Rundlauf- und/oder Rundheitsfehlerermittlung bzw. - messung/-en übertragbar. Kurz und vereinfacht, die Erfindung sieht sowohl eine - erfindungsgemäße Rundlauf- und/oder Rundheitsfehlerermittlung bei Spannmittel, wie auch eine solche erfindungsgemäße Rundlauf- und/oder Rundheitsfehlerermittlung bei Werkstücken vor.

Kurz und vereinfacht (auch in Hinblick auf die textuelle Ausgestaltung der Anmeldung), spricht die Anmeldung von Spannmittel, ist (der Einfachheit halber) - obwohl mit einem Werkstück ein anderer Gegenstand vorliegt - auch Werkstück gemeint.

D.h. so insbesondere, bei dem erfindungsgemäßen Verfahren zur Ermittlung eines Rundlauf- und/oder Rundheitsfehlers bei einem Werkstück wird bei einem in einer ersten Messposition gehaltenen Werkstück eine erste Rundlauf- und/oder Rundheitsmessung durchgeführt. Das Werkstück wird von der ersten Messposition in eine zweite Messposition umgesetzt und bei dem in die zweite Messposition umgesetzten Werkstück wird eine zweite Rundlauf- und/oder Rundheitsmessung durchgeführt. Aus der ersten und der zweiten Rundlauf- und/oder Rundheitsmessung wird ein Rundlauf- und/oder Rundheitsfehler bei dem Werkstück ermittelt.

D.h. so auch insbesondere, die erfindungsgemäße Vorrichtung zur Ermittlung eines Rundlauf- und/oder Rundheitsfehlers bei einem Werkstück sieht eine Haltervorrichtung zum Halten eines Werkstücks in Messpositionen zur Durchführung einer Rundlauf- und/oder Rundheitsmessung an dem Werkstück, eine Messvorrichtung zur Durchführung einer Rundlauf- und/oder Rundheitsmessung bei einem in der Haltevorrichtung in einer Messposition gehaltenen Werkstücks und eine Auswerteeinrichtung zur Auswertung von von der Messvorrichtung durchgeführten Rundlauf- und/oder Rundheitsmessungen vor.

Die Auswerteeinheit ist derart eingerichtet, dass aus einer ersten und einer zweiten Rundlauf- und/oder Rundheitsmessung bei einem in der Haltevorrichtung gehaltenen Werkstück ein Rundlauf- und/oder Rundheitsfehler bei dem Werkstück ermittelbar ist, wobei die erste Rundlauf- und/oder Rundheitsmessung bei dem Werkstücks in einer ersten Messposition in der Haltervorrichtung durchgeführt worden ist und die zweite Rundlauf- und/oder Rundheitsmessung bei dem Werkstück in einer zweiten Messposition in der Haltervorrichtung durchgeführt worden ist und wobei das Werkstück in der Haltevorrichtung von der ersten Messposition in die zweite Messposition umgesetzt worden ist.

Vorzugsweise kann weiter auch bei der Erfindung vorgesehen sein, dass bei der zweiten Messposition das Spannmittel gegenüber der ersten Messposition um einen vorgebbaren, um eine Längsachse/Symmetrie- bzw. Rotationsachse des Spannmittels gedrehten Umsetzwinkel gedreht gehalten wird, welcher insbesondere zwischen 30° und 180°, insbesondere zwischen 60° und 180° oder 90° und 180° oder 120° und 180°, im speziellen ca. 120° sein kann.

Einerseits mag ein vorgebbarer Umsetzwinkel durch eine Querschnittform, beispielsweise eine im Querschnitt unrunde Form des Spannmittels, bedingt - und auch beschränkt sein, welche - beispielsweise bei einer regelmäßigen 3-polygonalen Form des Spannmittelquerschnitts - "nur" ein Umsetzen in 120° Winkeln zulässt. Andererseits mögen aber große Umsetzwinkel daher von Vorteil sein, da sich dadurch in den Rundlauf- und/oder Rundheitsmessungen bzw. deren Ergebnisse Rundlauf- und/oder Rundheitsfehler signifikanter widerspiegeln. Kleinere Umsetzwinkel mögen dann von Vorteil sein, wenn - bauteilbedingt - nur beschränkter Platz fürs Umsetzen vorhanden ist oder mehrere/viele Umsetzmessungen - mit mehreren/vielen Umsetzungen - durchgeführt werden (sollen).

Genannte Umsetzwinkel verstehen sich - im Falle mehrerer Messungen - entsprechend auch für Umsetzungen zwischen jeweils zwei der mehreren Umsetzmessungen.

Auch kann vorgesehen sein, dass bei der Rundlauf- und/oder Rundheitsmessung eine die Rundlauf- und/oder Rundheitsmessung durchführende Messvorrichtung eine Kontur des Spannmittels, insbesondere in einer, insbesondere zu der Längs-/Symmetrie- bzw. Rotationsachse des Spannmittels orthogonalen Messebene, abtastet, insbesondere berührungslos oder mit Berührkontakt zum Spannmittel abtastet.

Hierzu bzw. im Allgemeinen kann bei der Rundlauf- und/oder Rundheitsmessung das Spannmittel relativ zu einer die Rundlauf- und/oder Rundheitsmessung durchführenden Messvorrichtung bewegt werden, beispielsweise entweder dadurch, dass das Spannmittel - bei feststehender Messvorrichtung - rotiert wird (, beispielsweise dadurch, dass das Spannmittel in seiner - rotierbaren - Haltevorrichtung rotiert wird), und/oder dass die die Rundlauf- und/oder Rundheitsmessung durchführende Messvorrichtung um das Spannmittel herum bewegt/rotiert wird.

Zweitgenanntes kann beispielsweise im Falle einer Koordinatenmessmaschine als Messvorrichtung sein, wo hier die Messvorrichtung um das Spannmittel herum bewegt/rotiert wird, beispielsweise in der Form, dass die Tasteinrichtung der Koordinatenmessmaschine die Oberfläche des Spannmittels abscannt.

Zweckmäßig kann sich auch erweisen, wenn für das Verfahren eine alleinig dafür vorgesehene Anordnung, d.h. die Vorrichtung "alleinig", vorgesehen ist. Allerdings kann es auch zweckmäßig sein, wenn die Vorrichtung in eine bestehende Anordnung integriert wird/ist, beispielsweise in ein Voreinstellgerät oder eine Werkzeugmaschine. Hierbei kann sich nämlich von Vorteil erweisen, dass genannte Geräte bereits nutzbare Haltemittel und/oder (optische) Messvorrichtungen, welche auch für eine Rundlauf- und/oder Rundheitsmessung bzw. eine Konturmessung eingesetzt werden können, aufweisen.

Weiterhin hat es sich als zweckmäßig erwiesen, dass unter Verwendung der Rundlauf- und/oder Rundheitsmessungen jeweils ein Mittelpunkt, insbesondere ein geometrischer Mittelpunkt oder geometrischer Schwerpunkt, insbesondere unter Verwendung eines Ausgleichsverfahrens, wie beispielsweise nach Gauß, des Spannmittels ermittelt wird (, beispielsweise eines Radialschnitts durch das Spannmittel,) und unter Verwendung von den ermittelten Mittelpunkten der Rundlauffehler und/oder Rundheitsfehler des Spannmittels ermittelt wird.

Weiterhin kann auch vorgesehen sein, dass aus der ersten und der zweiten Rundlauf- und/oder Rundheitsmessung (bzw. ggfl. mehreren/vielen Rundlauf- und/oder Rundheitsmessungen bzw. deren Ergebnissen), ein Rundlauf- und/oder Rundheitsfehler bei der das Spannmittel bei den Rundlauf- und/oder Rundheitsmessungen haltenden Haltevorrichtung ermittelt wird. Vereinfacht und anschaulich ausgedrückt, aus den Umsetzmessungen wird nicht nur der Rundlauf- und/oder Rundheitsfehler des Spannmittels, sondern auch der der Haltevorrichtung ermittelt/-rechnet.

Weitere Rundlauf- und/oder Rundheitsfehler von ggfl. an dem Gesamtsystem auch beteiligten Komponenten, wie Adapter, lassen sich auch aus den Umsetzmessungen berechnen.

Auch kann vorgesehen sein, dass aus der ersten und der zweiten Rundlauf- und/oder Rundheitsmessung (bzw. ggfl. mehreren/vielen Rundlauf- und/oder Rundheitsmessungen bzw. deren Ergebnissen) ein Rundlaufwinkel, ein Betrag, eine Phase bzw. eine Richtung des Rundlauffehlers (und/oder Rundheitsfehler) des Spannmittels und/oder einer das Spannmittel während der Rundlauf- und/oder Rundheitsmessungen haltenden Haltevorrichtung ermittelt wird.

Die Ermittlung eines Rundlauf- und/oder Rundheitsfehlers eines Spannmittels erfolgt in folgenden Schritten:
1. Einsetzen des Spannmittels in eine Haltevorrichtung
2. Anlegen der Messvorrichtung an die zu prüfende Oberfläche
3. Drehen der Haltevorrichtung um 360°.
   Aufnahme einer ausreichenden Anzahl von Messwerten der Messvorrichtung in Verbindung mit dem jeweiligen Drehwinkel der Haltevorrichtung
4. Berechnung eines ersten Mittelpunktes M1 aus den Daten aus Schritt 3
5. Umsetzen des Spannmittels um einen definierten Umsetzwinkel UW
6. Anlegen der Messvorrichtung an die zu prüfende Oberfläche
7. Drehen der Haltevorrichtung um 360°.
   Aufnahme einer ausreichenden Anzahl von Messwerten der Messvorrichtung in Verbindung mit dem jeweiligen Drehwinkel der Haltevorrichtung
8. Berechnung eines zweiten Mittelpunktes M2 aus den Daten aus Schritt 7
9. Berechnung des Rundlauffehlers mit Betrag Winkellage des Haltemittels aus den Mittelpunkten M1 und M2 und dem Umsetzwinkel UW
10. Berechnung des Rundlauffehlers mit Betrag und Winkellage des Spannmittels aus Mittelpunkt M1 oder M2 und Rundlauffehler des Haltemittels

Sobald der _Rundlauffehler des Haltemittels bekannt ist, kann der Rundlauffehler des Spannmittels in folgenden Messungen vereinfacht ermittelt werden:
1. Einsetzen des Spannmittels in eine Haltevorrichtung
2. Anlegen der Messvorrichtung an die zu prüfende Oberfläche
3. Drehen der Haltevorrichtung um 360°.
   Aufnahme einer ausreichenden Anzahl von Messwerten der Messvorrichtung in Verbindung mit dem jeweiligen Drehwinkel der Haltevorrichtung
4. Berechnung eines ersten Mittelpunktes M1 aus den Daten aus Schritt 3
5. Berechnung des Rundlauffehlers mit Betrag und Winkellage des Spannmittels aus Mittelpunkt M1 und Rundlauffehler des Haltemittels

Die Berechnung der Größen kann mit unterschiedlichen mathematischen Methoden durchgeführt werden. Die Messwerte sind vektorielle Größen und können beispielweise in Koordinatenschreibweise oder in Form von komplexen Zahlen angegeben werden.

Bei Durchführung des Verfahrens mit mehr als zwei Messungen kann wie folgt verfahren werden, wobei n die Anzahl der Messungen angibt:
1. Berechnung der Mittelpunkte M1 bis Mn aus den einzelnen Messungen wie oben beschrieben
2. Berechnung eines angenäherten Kreises, auf dem die Mittelpunkte M1 bis Mn liegen, durch ein mathematisches Näherungsverfahren
3. Berechnung des Mittelpunktes des angenäherten Kreises Der Mittelpunkt entspricht dem Rundlauf-/Rundheitsfehler des Haltemittels
4. Berechnung des Durchmessers des Kreises
   Der Durchmesser des Kreises entspricht dem Rundlauffehler des Spannmittels.

In einer weiteren Variante kann die Vielzahl von Messungen an mehreren axial unterschiedlichen Positionen des Spannmittels durchgeführt werden. Aus den Messergebnissen kann dann der Rundlauffehler des Spannmittels aufgeschlüsselt werden in Neigungsfehler (Winkelfehler) und radialer Versatz.

In einer weiteren Variante können die Messungen auch bei hoher Drehzahl des Haltemittels durchgeführt werden. Insbesondere dann, wenn der Rundlauffehler des Haltemittels bestimmt werden soll, beispielsweise der Spindel einer Werkzeugmaschine, kann das Verhalten bei verschiedenen Drehzahlen von Interesse sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Messvorrichtung zur Durchführung von Umsetzmessungen an einer Werkzeugaufnahme zur Ermittlung einer Rundlauf- und/oder Rundheitsfehlers bei der Werkzeugaufnahme;

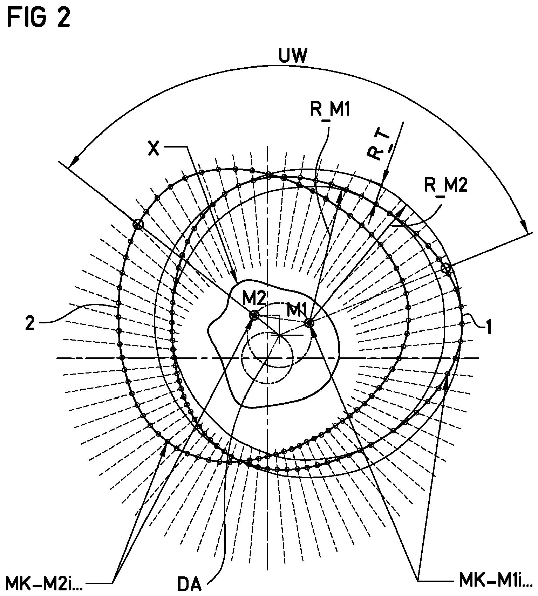

- FIG 2: ein erstes Diagramm, welches zwei Umsetzmessungen an einer Werkzeugaufnahme zeigt;

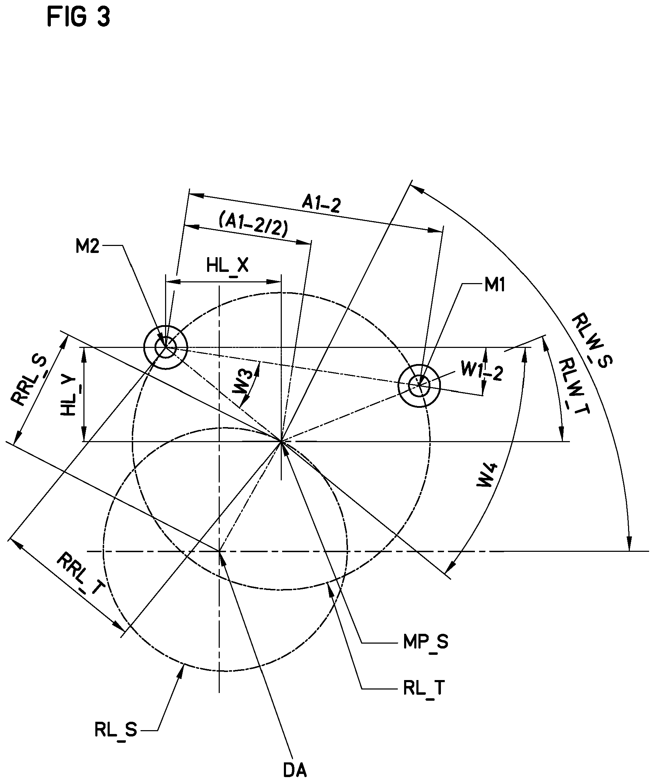

- FIG 3: ein zweites Diagramm, welches die Ermittlung des Rundlauf- und/oder Rundheitsfehlers bei zwei Umsetzmessungen an einer Werkzeugaufnahme verdeutlicht.

- Rundlauf- und/oder Rundheitsfehlerermittlung aus zwei Umsetzmessungen an einer Werkzeugaufnahme **(FIGen 1 bis 3)**

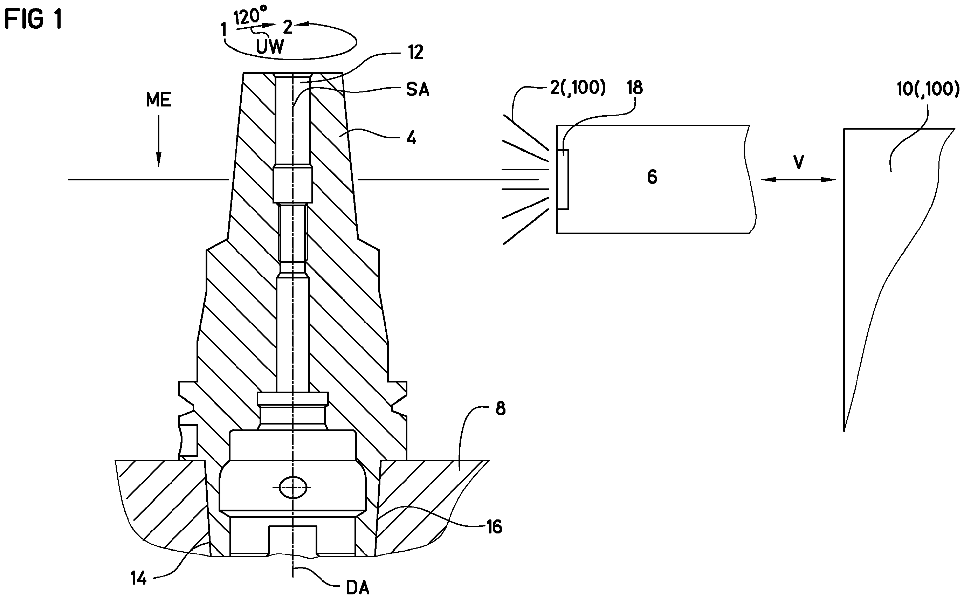

FIG 1 zeigt - schematisch - eine Vorrichtung 2 zur Messung eines Rundlaufs und/oder einer Rundheit an einem Spannmittel 4, hier ein Schrumpffutter 4 für einen Fräser.

Bei dem zu vermessenden Schrumpffutter 4 handelt es sich um ein rotationssymmetrisches Bauteil (mit entsprechender Symmetrieachse SA, welches einerends eine zylindrische Ausnehmung 12 zur Aufnahme des Fräsers (nicht dargestellt) aufweist. Andererends weist das Schrumpffutter 4 eine - in diesem Fall - (im Wesentlichen kegelförmige) HSK-Schnittstelle 14 auf.

Die Vorrichtung 2, wie in FIG 1 auch gezeigt, sieht eine - um ihre Längs- bzw. Symmetrieachse, der Anschaulichkeit und Einfachheit halber auch nur als Drehachse DA bezeichnet - rotierbare Haltevorrichtung 8 für das zu vermessendes Schrumpffutter 4 vor.

Die Aufnahme bzw. eine Einspannung des zu vermessenden Schrumpffutters 4 in der Haltevorrichtung 8 erfolgt über eine dortige kegelförmige Ausnehmung 16, in welcher das zu vermessende Schrumpffutter 4 mit ihrer HSK-Schnittstelle 14 einsetzbar und haltbar ist.

Durch Fertigungstoleranzen kann es zu einer Abweichung zwischen einer Symmetrieachse der kegelförmigen Ausnehmung 16 und der Drehachse DA der Haltevorrichtung 8 kommen, was einen Rundlauffehler der Haltevorrichtung 8 bedingt. Auch Rundheitsfehler können bei der Haltevorrichtung 8 nicht ausgeschlossen werden. Entsprechende Rundlauf- und/oder Rundheitsfehler sind auch bei dem Schrumpffutter 4 anzunehmen.

Wie weiter FIG 1 verdeutlicht, sieht die Vorrichtung 2 eine einen (Mess-)Sensor 18 aufweisende Messvorrichtung 6 vor, welches die Rundlauf- und/oder Rundheitsmessung an dem - in der Haltevorrichtung 8 bzw. dortiger kegelförmiger Ausnehmung 16 aufgenommenen - Schrumpffutter 4 durchführt.

Die - feststehende - Messvorrichtung 6 misst dabei in einer zu der Symmetrieachse SA des Schrumpffutters 4 orthogonalen Messebene ME, wobei während einer solchen Rundlauf- und/oder Rundheitsmessung das zu vermessende Schrumpffutter 4 mindestens einmal vollständig um ihre Symmetrieachse SA gedreht wird. Dabei wird die (360°-)Kontur des Schrumpffutters 4 in der Messebene ME einmal vollständig abgetastet und so vollumfänglich erfasst. Entsprechende Messwerte bilden auch Grundlage nachfolgender Rechenoperationen zur Ermittlung des Rundheits- und/oder Rundlauffehlers des Schrumpffutters 4 (, wie auch der Haltevorrichtung 8).

Wie weiter auch in FIG 1 verdeutlicht ist, erfolgen zwei Rundlauf- und/oder Rundheitsmessungen, die erste Rundlauf- und/oder Rundheitsmessung in einer ersten und die zweite Rundlauf- und/oder Rundheitsmessung in einer zweiten Messposition des Schrumpffutters 4. (Werte/Parameter/Positionsbeschreibungen, welche aus der ersten Rundlauf- und/oder Rundheitsmessung stammen bzw. dieser zugehörig sind, werden nachfolgend mit "1" indiziert; Werte/Parameter/Positionsbeschreibungen, welche aus der zweiten Rundlauf- und/oder Rundheitsmessung stammen bzw. dieser zugehörig sind, werden mit "2" indiziert, vgl. auch FIGen 2 und 3.) .

Wie FIG 1 auch verdeutlicht, wird das Schrumpffutter 4, um von seiner ersten Messposition in seine zweite Messposition zu kommen, umgesetzt, d.h. das Schrumpffutter 4 wird um seine Symmetrieachse um einen vorgebbaren Umsetzwinkel UW, in diesem Fall 120°, gedreht - bzw. um den Umsetzwinkel UW gedreht in die Haltevorrichtung 8 bzw. die dortige kegelförmige Ausnehmung 16 eingesetzt.

Mit der Messvorrichtung 6 verbunden (V) ist eine Auswerteeinheit 10, in Form einer Recheneinheit, in welcher ein Computerprogramm gespeichert ist, welches, wenn es ausgeführt wird, aus den von der Messvorrichtung 6 an die Auswerteeinheit 10 übertragenen Messwerten (s. nachfolgend, FIGen 2 und 3) den Rundlauf- und/oder Rundheitsfehler des Schrumpffutters 4 (und der Haltevorrichtung 8) ermittelt.

FIGen 2 und 3 verdeutlichen - im Detail - die auf den Umsetzmessungen basierende Ermittlung des Rundlauf- und/oder Rundheitsfehlers des Schrumpffutters 4 (und der Haltevorrichtung 8) .

Dabei haben folgende Abkürzungen folgende Bedeutung (vgl. auch FIGen 2 und 3):
- "1", "2": Index erste bzw. zweite Rundlauf- und/oder Rundheitsmessung
- DA: Drehachse Haltevorrichtung
- ME: Messebene
- UW: Umsetzwinkel (zwischen 1 und 2)
- M1, M2: (geom.) Mittelpunkt des Schrumpffutters in der Messebene ME
- MK_M1(i), MK_M2(i): Mess-/Konturpunkte des Schrumpffutters in der Messebene ME aus erster bzw. zweiter Rundlauf- und/oder Rundheitsmessung ("i" Index Punkt)
- A1-2: Abstand zwischen M1 und M2
- W1-2: Winkel zwischen M1 und M2
- W3, W4: Winkel
- RRL_T: radialer Rundlauf Teil/Schrumpffutter
- RL_T: Rundlauffehler Teil/Schrumpffutter
- HL_X, HL_Y: Hilfslänge
- MP_S: Mittelpunkt Spann-/Haltevorrichtung
- RRL_S: radialer Rundlauf Spann-/Haltevorrichtung
- RL_S: Rundlauffehler Spann-/Haltevorrichtung
- RLW_S: Rundlaufwinkel Spann-/Haltevorrichtung
- RLW_T: Rundlaufwinkel Teil/Schrumpffutter
- R_M1: Rundheit Messung 1
- R_M2: Rundheit Messung 2
- R_T: Rundheit Teil/Schrumpffutter

Der Rundlauf- und/oder Rundheitsfehlers des Schrumpffutters 4 (und der Haltevorrichtung 8) ergibt sich wie folgt:
1. Umsetzmessung
   a.) Koordinaten polar messen und kartesisch umrechnen MK_M1(i)
   b.) Berechnen vom (geom.) Mittelpunkt M1 aus den Punkten MK_M1(i)
   **Umsetzen von 1 in 2:** Teil/Schrumpffutter aus Haltevorrichtung lösen, um Umsetzwinkel UW drehen und wieder spannen
2. Umsetzmessung
   a.) Koordinaten polar messen und kartesisch umrechnen MK_M2(i)
   b.) Berechnen vom (geom.) Mittelpunkt M2 aus den Punkten MK_M2(i)
3. Berechnung Rundlauf
   (Berechnen aus den kartesischen Mittelpunkten M1 und M2)
   a.) Abstand A1-2 zwischen M1 und M2
   b.) Winkel W1-2 zwischen M1 und M2
   c.) Winkel W3 (= (180°-W1) / 2), Winkel W4 (= W1-2 + W3)
   d.) radialer Rundlauf Teil/Schrumpffutter RRL_T (aus A1-2/2 und W3)
   e.) Rundlauffehler Teil/Schrumpffutter RL_T (=RRL_T * 2)
   f.) Hilfslängen HL_X und HL_Y (aus RRL_T und W4)
   g.) Mittelpunkt Spannmittel/Haltevorrichtung MP_S (Über M2, HL_X und HL_Y)
   h.) radialer Rundlauf Spann-/Haltevorrichtung (über MP_S und DA)
   i.) Rundlauffehler Spann-/Haltevorrichtung RL_S (=RRL_S * 2)
   j.) Rundlaufwinkel Spann-/Haltevorrichtung RLW_S (über MP_S und DA)
   k.) Rundlaufwinkel Teil/Schrumpffutter RLW_T (über MP_S und M1)
4. Berechnung Rundheit
   (Berechnung aus den polaren Werten aus 1. Und 2. Umsetzmessung)
   a.) Rundheit Messung 1 R_M1
   b.) Rundheit Messung 2 R M2
   c.) Rundheit Teil/Schrumpffutter R_T (= (R_M1 + R_M2)/2)

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Vorrichtung zur Ermittlung eines Rundlauf- und/oder Rundheitsfehlers bei einem Spannmittel
- 4: Spannmittel, Werkzeugaufnahme, Schrumpffutter
- 4': Werkstück
- 6: Messvorrichtung,
- 8: Haltevorrichtung
- 10: Auswerteinheit
- 12: zylindrische Ausnehmung am Spannmittel/Schrumpffutter 4
- 14: (HSK-)Schnittstelle am Spannmittel/Schrumpffutter 4
- 16: kegelförmige Ausnehmung an der Haltevorrichtung 8
- 18: (Mess-)Sensor
- SA: Symmetrieache
- DA: Drehachse
- V: Verbindung (zwischen der Messvorrichtung 6 und der Auswerteinheit 10)
- 100: Verfahren zur Ermittlung eines Rundlauf- und/oder Rundheitsfehlers bei einem Spannmittel

## Patentansprüche

1. Verfahren (100) zur Ermittlung eines Rundlauf- und/oder Rundheitsfehlers bei einem Spannmittel (4), insbesondere einer Werkzeugaufnahme (4) oder einer Werkstückaufnahme,
bei dem bei einem in einer ersten Messposition gehaltenen Spannmittel (4) eine erste Rundlauf- und/oder Rundheitsmessung durchgeführt wird,
das Spannmittel (4) von der ersten Messposition in eine zweite Messposition umgesetzt wird,
bei dem in die zweite Messposition umgesetzten Spannmittel (4) eine zweite Rundlauf- und/oder Rundheitsmessung durchgeführt wird und
aus der ersten und der zweiten Rundlauf- und/oder Rundheitsmessung ein Rundlauf- und/oder Rundheitsfehler bei dem Spannmittel (4) ermittelt wird.

2. Verfahren (100) zur Ermittlung eines Rundlauf- und/oder Rundheitsfehlers bei einem Werkstück (4'),
bei dem bei einem in einer ersten Messposition gehaltenen Werkstück (4') eine erste Rundlauf- und/oder Rundheitsmessung durchgeführt wird,
Werkstück (4') von der ersten Messposition in eine zweite Messposition umgesetzt wird,
bei dem in die zweite Messposition umgesetzten Werkstück (4') eine zweite Rundlauf- und/oder Rundheitsmessung durchgeführt wird und
aus der ersten und der zweiten Rundlauf- und/oder Rundheitsmessung ein Rundlauf- und/oder Rundheitsfehler bei dem Werkstück (4') ermittelt wird.

3. Verfahren (100) nach einem der voranstehenden Ansprüche **dadurch gekennzeichnet, dass**
bei der zweiten Messposition das Spannmittel (4) bzw. das Werkstück (4') gegenüber der ersten Messposition um einen vorgebbaren, um eine Längsachse/Rotationsachse des Spannmittels (4) bzw. des Werkstücks (4') gedrehten Umsetzwinkel gedreht gehalten wird.

4. Verfahren (100) nach einem der voranstehenden Ansprüche **dadurch gekennzeichnet, dass**
der Umsetzwinkel zwischen 30° und 180°, insbesondere zwischen 60° und 180° oder 90° und 180° oder 120° und 180°, im speziellen ca. 120°

5. Verfahren (100) nach einem der voranstehenden Ansprüche **dadurch gekennzeichnet, dass**
bei der Rundlauf- und/oder Rundheitsmessung eine die Rundlauf- und/oder Rundheitsmessung durchführende Messvorrichtung (6) eine Kontur des Spannmittels (4) bzw. des Werkstücks (4'), insbesondere in einer, insbesondere zu einer Längs/Symmetrie- bzw. Rotationsachse des Spannmittels (4) bzw. des Werkstücks (4') orthogonalen, Messebene, abtastet, insbesondere berührungslos oder mit Berührkontakt zum Spannmittel (4) bzw. zum Werkstück (4') abtastet.

6. Verfahren (100) nach einem der voranstehenden Ansprüche **dadurch gekennzeichnet, dass**
bei der Rundlauf- und/oder Rundheitsmessung das Spannmittel (4) bzw. das Werkstück (4') rotiert wird oder eine die Rundlauf- und/oder Rundheitsmessung durchführende Messvorrichtung (6) um das Spannmittel (4) bzw. das Werkstück (4') rotiert wird.

7. Verfahren (100) nach einem der voranstehenden Ansprüche **dadurch gekennzeichnet, dass**
unter Verwendung der Rundlauf- und/oder Rundheitsmessungen jeweils ein Mittelpunkt, insbesondere ein geometrischer Mittelpunkt oder geometrischer Schwerpunkt, insbesondere unter Verwendung eines Ausgleichsverfahrens, wie beispielsweise nach Gauß, des Spannmittels (4) bzw. des Werkstücks (4') ermittelt wird und unter Verwendung von den ermittelten Mittelpunkten der Rundlauffehler und/oder Rundheitsfehler des Spannmittels (4) bzw. des Werkstücks (4') ermittelt wird.

8. Verfahren (100) nach einem der voranstehenden Ansprüche **dadurch gekennzeichnet, dass**
aus der ersten und der zweiten Rundlauf- und/oder Rundheitsmessung ein Rundlauf- und/oder Rundheitsfehler bei einer das Spannmittel (4) bzw. das Werkstück (4') bei den Rundlauf- und/oder Rundheitsmessungen haltenden Haltevorrichtung (8) ermittelt wird.

9. Verfahren (100) nach einem der voranstehenden Ansprüche **dadurch gekennzeichnet, dass**
aus der ersten und der zweiten Rundlauf- und/oder Rundheitsmessung ein Rundlaufwinkel bzw. eine Richtung des Rundlauffehlers des Spannmittels (4) bzw. des Werkstücks (4') und/oder einer das Spannmittel (4) bzw. das Werkstück (4') während der Rundlauf- und/oder Rundheitsmessungen haltenden Haltevorrichtung (8) ermittelt wird.

10. Vorrichtung (2) zur Ermittlung eines Rundlauf- und/oder Rundheitsfehlers bei einem Spannmittel (4), insbesondere einer Werkzeugaufnahme (4) oder einer Werkstückaufnahme,
mit:
- einer Haltervorrichtung (8) zum Halten eines Spannmittels (4) in Messpositionen zur Durchführung einer Rundlauf- und/oder Rundheitsmessung an dem Spannmittel (4),
- einer Messvorrichtung (6) zur Durchführung einer Rundlauf- und/oder Rundheitsmessung bei einem in der Haltevorrichtung (8) in einer Messposition gehaltenen Spannmittel (4) und
- einer Auswerteeinrichtung (10) zur Auswertung von von der Messvorrichtung (6) durchgeführten Rundlauf- und/oder Rundheitsmessungen,
**dadurch gekennzeichnet, dass**
die Auswerteeinheit (10) derart eingerichtet, dass aus einer ersten und einer zweiten Rundlauf- und/oder Rundheitsmessung bei einem in der Haltevorrichtung (8) gehaltenen Spannmittel (4) ein Rundlauf- und/oder Rundheitsfehler bei dem Spannmittel (4) ermittelbar ist, wobei die erste Rundlauf- und/oder Rundheitsmessung bei dem Spannmittel (4) in einer ersten Messposition in der Haltervorrichtung (8) durchgeführt worden ist und die zweite Rundlauf- und/oder Rundheitsmessung bei dem Spannmittel (4) in einer zweiten Messposition in der Haltervorrichtung (8) durchgeführt worden ist und wobei das Spannmittel (4) in der Haltevorrichtung (8) von der ersten Messposition in die zweite Messposition umgesetzt worden ist.

11. Vorrichtung (2) zur Ermittlung eines Rundlauf- und/oder Rundheitsfehlers bei einem Werkstück (4') mit:
- einer Haltervorrichtung (8) zum Halten eines Werkstücks (4') in Messpositionen zur Durchführung einer Rundlauf- und/oder Rundheitsmessung an dem Werkstück (4'),
- einer Messvorrichtung (6) zur Durchführung einer Rundlauf- und/oder Rundheitsmessung bei einem in der Haltevorrichtung (8) in einer Messposition gehaltenen Werkstücks (4') und
- einer Auswerteeinrichtung (10) zur Auswertung von von der Messvorrichtung (6) durchgeführten Rundlauf- und/oder Rundheitsmessungen,
**dadurch gekennzeichnet, dass**
die Auswerteeinheit (10) derart eingerichtet, dass aus einer ersten und einer zweiten Rundlauf- und/oder Rundheitsmessung bei einem in der Haltevorrichtung (8) gehaltenen Werkstück (4') ein Rundlauf- und/oder Rundheitsfehler bei dem Werkstücks (4') ermittelbar ist, wobei die erste Rundlauf- und/oder Rundheitsmessung bei dem Werkstück (4') in einer ersten Messposition in der Haltervorrichtung (8) durchgeführt worden ist und die zweite Rundlauf- und/oder Rundheitsmessung bei dem Werkstück (4') in einer zweiten Messposition in der Haltervorrichtung (8) durchgeführt worden ist und wobei das Werkstück (4') in der Haltevorrichtung (8) von der ersten Messposition in die zweite Messposition umgesetzt worden ist.

12. Vorrichtung (2) nach einem der voranstehenden Vorrichtungsansprüche,
**dadurch gekennzeichnet, dass**
die Haltevorrichtung (8) rotierbar ist oder dass die Messvorrichtung (6) um das Spannmittel (4) bzw. das Werkstück (4') rotierbar ist.
